# FASCICULE DE BREVET EUROPEEN

(11) **EP 3 984 125 B1**
(45) Date de publication et mention de la délivrance du brevet: **23.08.2023**
(21) Numéro de dépôt: 20731899.9
(22) Date de dépôt: 16.06.2020
(51) Int. Cl.: H02M 7/217

(54) **DISPOSITIF D'ALIMENTATION A PARTIR D'UNE TENSION ALTERNATIVE**
VORRICHTUNG ZUR STROMVERSORGUNG AUS EINER WECHSELSPANNUNG
DEVICE FOR SUPPLYING POWER FROM AN AC VOLTAGE

(30) Priorité: 17.06.2019 FR 1906463
(43) Date de publication de la demande: 20.04.2022
(73) Titulaire: Commissariat à l'Energie Atomique et aux Energies Alternatives, 75015 Paris (FR)
(72) Inventeur: BAILLY, Alain, 13790 ROUSSET (FR); BERGOGNE, Dominique, 38054 GRENOBLE CEDEX 9 (FR); BOUCHET, Thierry, 38054 GRENOBLE CEDEX 9 (FR)
(74) Mandataire: Cabinet Beaumont
(86) Numéro de dépôt international: PCT/EP2020/066636
(87) Numéro de publication internationale: WO 2020/254328

(56) Documents cités:
- EP-A1- 3 346 597
- WO-A1-2013/099918
- US-A- 3 371 263
- US-A1- 2008 259 645

## Description

La présente demande de brevet revendique la priorité de la demande de brevet français FR19/06463 qui sera considérée comme faisant partie intégrante de la présente description.

### Domaine technique

La présente description concerne de façon générale les circuits électroniques, et plus particulièrement des dispositifs permettant de fournir une puissance électrique à partir d'une tension alternative.

### Technique antérieure

Divers dispositifs sont alimentés en électricité par une tension différente de celle d'un réseau d'alimentation électrique Un exemple d'un tel dispositif peut être trouvé dans le document WO 2013/099918.

Par exemple, des dispositifs électroniques mobiles, tels que des objets connectés, des téléphones mobiles, des tablettes numériques, comprennent un stockage d'énergie électrique tel qu'une batterie. La batterie est rechargée par une tension typiquement continue, par exemple de 5 V. Cette tension peut également servir à alimenter directement un équipement. Un dispositif d'alimentation permet d'obtenir cette tension à partir d'une tension alternative d'un réseau électrique, typiquement à environ 230 V (en valeur efficace) et 50 Hz, ou à environ 120 V (en valeur efficace) et 60 Hz. Résumé de l'invention

Un mode de réalisation pallie tout ou partie des inconvénients des dispositifs connus d'alimentation électrique à partir d'une tension alternative.

Un mode de réalisation prévoit un dispositif d'alimentation électrique s'échauffant moins que les dispositifs connus, pour une même puissance d'alimentation.

Un mode de réalisation prévoit un dispositif d'alimentation électrique ayant un rendement de conversion plus élevé que celui des dispositifs connus.

Un mode de réalisation prévoit un dispositif d'alimentation électrique particulièrement compact.

Ainsi, un mode de réalisation prévoit un dispositif de fourniture d'une tension continue entre deux bornes de sortie à partir d'une tension alternative appliquée sur des bornes d'entrée, comprenant :
- un premier élément capacitif ;
- deux premiers interrupteurs en demi-pont entre des bornes du premier élément capacitif ;
- deux deuxièmes interrupteurs électriquement en série entre les bornes du premier élément capacitif (120)
- un transformateur, comprenant un premier enroulement placé entre l'une des bornes d'entrée et un noeud de liaison entre les premiers interrupteurs, l'autre des bornes d'entrée (102) étant reliée à un noeud (134) de liaison entre les deuxièmes interrupteurs ;
- un circuit de redressement double alternance fournissant la tension continue, comprenant : deux deuxièmes éléments capacitifs électriquement en série entre les bornes de sortie ; et deux troisièmes interrupteurs chacun placé entre l'une des bornes de sortie et un deuxième enroulement du transformateur
- un circuit, configuré pour commuter les interrupteurs et commander les deuxièmes interrupteurs ;
- un circuit configuré pour commander la tension fournie par le dispositif, agissant sur la fréquence de découpage et/ou sur un retard entre des instants où un courant alternatif circulant dans le deuxième enroulement change de sens et des instants suivants de commutation des troisièmes interrupteurs.

Selon un mode de réalisation, le dispositif comprend :
- un capteur de tension (182) fournissant une valeur de la tension continue ; et
- un circuit (180) configuré pour agir sur la fréquence de découpage et/ou sur ledit retard à partir de la valeur de la tension continue.

Selon un mode de réalisation, le dispositif comprend un circuit configuré pour, à chaque alternance de la tension alternative, rendre passant un seul des deuxièmes interrupteurs pendant au moins une phase centrale de l'alternance, ledit seul des deuxièmes interrupteurs étant fonction du signe de l'alternance.

Selon un mode de réalisation, le dispositif comprend un circuit configuré pour réguler une moyenne mobile d'un courant circulant par les bornes d'entrée, en fonction d'une consigne de courant, en agissant sur un rapport cyclique de la commutation des premiers interrupteurs.

Selon un mode de réalisation, la consigne de courant a une valeur représentative d'un résultat de multiplication d'une valeur de conductance par une valeur de la tension alternative.

Selon un mode de réalisation, le dispositif comprend un circuit configuré pour réguler une valeur de tension dudit élément capacitif en agissant sur ladite valeur de conductance.

Selon un mode de réalisation, le dispositif comprend, pour au moins l'une des bornes du premier élément capacitif, un élément capacitif supplémentaire reliant à la borne du premier élément capacitif ladite l'une des bornes d'entrée.

Selon un mode de réalisation, le dispositif comprend un circuit configuré pour bloquer les deuxièmes interrupteurs pendant des phases de transition entre lesdites phases centrales.

Selon un mode de réalisation, le dispositif comprend un circuit configuré pour, à chaque phase de transition, faire varier progressivement un rapport cyclique de la commutation des premiers interrupteurs, de manière à obtenir une valeur prédéfinie de tension aux bornes de celui des deuxièmes interrupteurs qui sera rendu passant pendant la phase centrale suivant la phase de transition.

Selon un mode de réalisation, la phase centrale suivant chaque phase de transition commence au moment où la tension alternative a ladite valeur prédéfinie de tension.

Selon un mode de réalisation, la phase de transition suivant chaque phase centrale commence au moment où la tension alternative a ladite valeur prédéfinie.

Selon un mode de réalisation, le dispositif comprend un circuit configuré pour obtenir une tension nulle entre les bornes de chacun des premiers interrupteurs aux moments des commutations.

Selon un mode de réalisation, le transformateur a un coefficient de couplage strictement inférieur à 1.

Selon un mode de réalisation, les premiers interrupteurs sont des transistors de type HEMT.

Un mode de réalisation prévoit un dispositif d'alimentation par prise USB-C comprenant un dispositif tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un mode de réalisation d'un dispositif d'alimentation électrique à partir d'une tension alternative ;
la figure 2 est un chronogramme représentant schématiquement un fonctionnement du dispositif de la figure 1 ;
la figure 3 représente, de manière partielle schématique, un autre mode de réalisation d'un dispositif d'alimentation électrique à partir d'une tension alternative ;
la figure 4 représente, de manière partielle et schématique, un autre mode de réalisation d'un dispositif d'alimentation électrique à partir d'une tension alternative ;
la figure 5 illustre un exemple de procédé mis en oeuvre par le dispositif de la figure 4 ;
la figure 6 est un chronogramme illustrant le fonctionnement du dispositif de la figure 4 lorsque le procédé de la figure 5 est mis en oeuvre
la figure 7 représente un exemple d'un circuit de redressement double alternance du dispositif de la figure 1 ;
   et
la figure 8 représente un autre exemple d'un circuit de redressement double alternance du dispositif de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

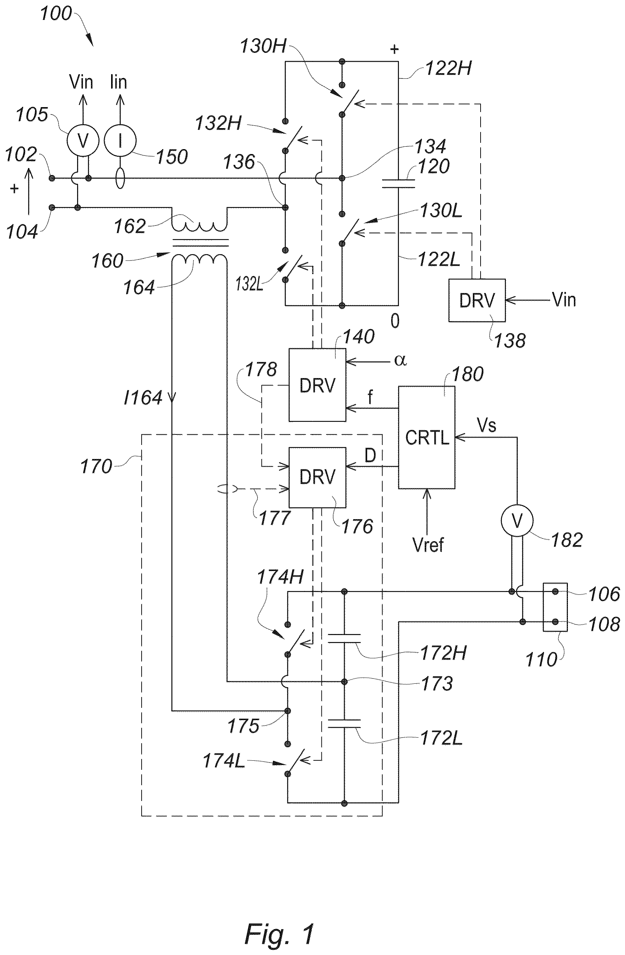

La figure 1 représente, de manière schématique, un mode de réalisation d'un dispositif 100 d'alimentation électrique à partir d'une tension alternative de valeur Vin.

De préférence, la tension alternative est celle d'un réseau électrique, et a des valeurs de tension et de fréquence telles que mentionnées en préambule. Ceci n'est pas limitatif, la tension alternative pouvant avoir d'autres valeurs de tension, de préférence une valeur crête inférieure à environ 1,5 kV, et/ou d'autres fréquences, de préférence inférieures à environ 1 kHz. Par exemple la tension peut être fournie par un dispositif embarqué, par exemple un alternateur d'un véhicule, ou par un réseau d'alimentation embarqué.

La tension alternative est appliquée à des noeuds 102 et 104 constituant des bornes d'entrée du dispositif 100. Lorsque cette tension alternative d'entrée est celle d'un réseau comprenant une phase et un neutre, les deux sens d'application phase/neutre aux noeuds 102 et 104 sont possibles. De préférence, le dispositif 100 comprend un capteur de tension (V) 105 relié, de préférence connecté, aux noeuds 102 et 104. Le capteur 105 fournit, à chaque instant, la valeur Vin de la tension d'entrée.

Le dispositif 100 fournit une tension d'alimentation d'un dispositif électronique (non représenté) entre des bornes 106 et 108. Les bornes 106 et 108 constituent ainsi des bornes de sortie du dispositif. De préférence, le dispositif 100 comprend une prise 110 permettant une connexion électrique au dispositif électronique à alimenter. Par exemple, la prise 110 est une prise USB ("Universal Serial Bus") de type C, couramment appelée prise USB-C. Les bornes de sortie 106 et 108 correspondent par exemple à certaines des broches de la prise USB-C. Cet exemple n'est pas limitatif, les modes de réalisation décrits étant compatibles avec les modes usuels de connexion à un dispositif électronique.

De préférence, la tension fournie par le dispositif 100 est continue, par exemple de 5 V. Le dispositif constitue ainsi un convertisseur alternatif-continu. A titre d'exemple, la puissance fournie par le dispositif 100 peut varier, en cours de fonctionnement, entre zéro et une puissance maximale. La puissance maximale est par exemple inférieure à 500 W, de préférence inférieure ou égale à 100 W, plus préférentiellement égale à 100 W. Cet exemple n'est pas limitatif, le dispositif pouvant fournir d'autres niveaux de tension continue.

Le dispositif 100 comprend un élément capacitif 120 ayant deux bornes 122H et 122L. De préférence, l'élément capacitif 120 comprend, par exemple est constitué par, un condensateur ou un ensemble de condensateurs électriquement en parallèle et/ou en série entre les bornes 122H et 122L.

Le dispositif 100 comprend des interrupteurs 130H et 130L en série entre les bornes 122H et 122L de l'élément capacitif 120. Le dispositif 100 comprend en outre des interrupteurs 132H et 132L en série entre les bornes 122H et 122L de l'élément capacitif 120. Plus précisément, la borne 122H est reliée, de préférence connectée, aux interrupteurs 130H et 132H. La borne 122L est reliée, de préférence connectée, aux interrupteurs 130L et 132L. Un noeud 134 relie en série, de préférence connecte en série, les interrupteurs 130L et 130H. Un noeud 136 relie en série, de préférence connecte en série, les interrupteurs 132H et 132L.

De préférence, les interrupteurs 130H, 130L, 132H et 132L comprennent, ou sont constitués par, des transistors. Les transistors sont de préférence de type à effet de champ, par exemple de type MOS. Les types de canaux des transistors sont alors définis de manière usuelle en fonction des signes des tensions bloquées par les transistors et des commandes appliquées aux transistors. Plus préférentiellement, les transistors constituant les interrupteurs 130H, 130L, 132H et 132L sont de type à haute mobilité électronique HEMT ("High Electronic Mobility Transistor"), comprenant par exemple des semiconducteurs à base d'arséniure de gallium. De tels transistors présentent une conductance particulièrement élevée à l'état passant, ce qui permet un rendement énergétique particulièrement élevé. Les transistors sont préférentiellement du type bloqué en l'absence de tension de commande, mais peuvent aussi être du type passant en l'absence de tension de commande. La personne du métier est en mesure d'adapter les modes de réalisation décrits à des transistors du type passant en l'absence de tension de commande, par exemple de la manière décrite dans le document D. Bergogne et al., "Normally-On SiC JFETs in power converters: Gate driver and safe operation,", 2010 6th International Conférence on Integrated Power Electronics Systems, Nuremberg, 2010, p. 1-6.

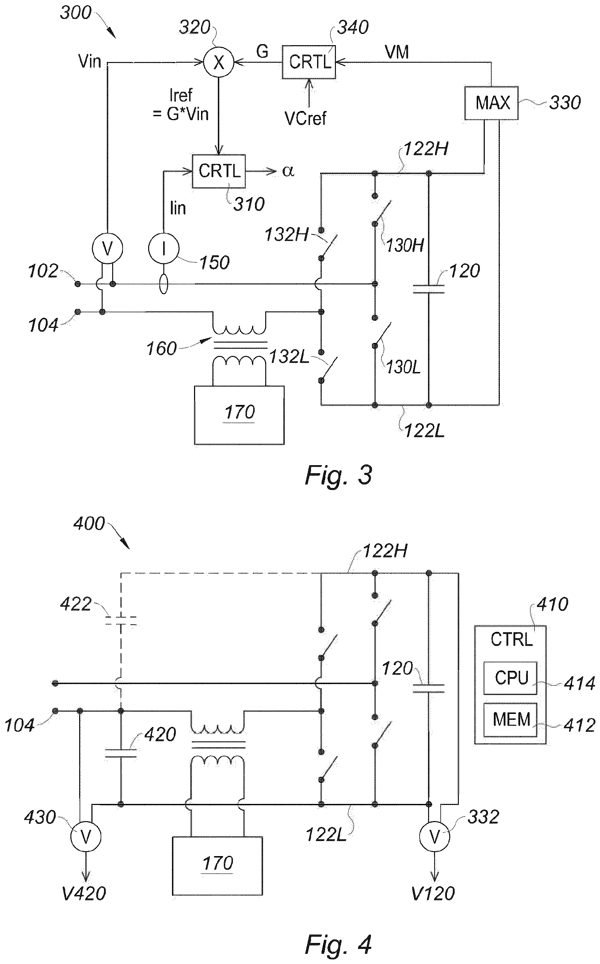

Les interrupteurs 130H et 130L sont par exemple commandés par un circuit de commande 138 (DRV). Selon un mode de réalisation, le circuit de commande 138 reçoit le valeur Vin de la tension alternative. Le circuit 138 est alors configuré pour que l'interrupteur 130H soit passant (fermé), et l'interrupteur 130L bloqué (ouvert), lorsque le potentiel du noeud 102 est supérieur à celui du noeud 104, c'est-à-dire lorsque la tension alternative entre les noeuds 104 et 102 est dans une alternance positive. De la même manière, l'interrupteur 130L est passant, et l'interrupteur 130H bloqué, lorsque le potentiel du noeud 102 est inférieur à celui du noeud 104, c'est-à-dire lorsque la tension alternative entre les noeuds 104 et 102 est dans une alternance négative. Ceci n'est pas limitatif, les signes des alternances pouvant être échangés, et/ou les interrupteurs 130H et 130L pouvant être commandés selon d'autres modes de réalisation, tels que ceux décrits ci-après en relation avec les figures 3 à 5.

Les interrupteurs 132H et 132L sont commandés par un circuit de commande 140 (DRV). En fonctionnement, le circuit de commande 140 permet de rendre passant alternativement l'interrupteur 132H et l'interrupteur 132L. L'interrupteur non rendu passant est bloqué. Autrement dit, les interrupteurs 132H et 132L sont commutés en opposition. Les interrupteurs forment ainsi un demi-pont commandé. Chaque commutation correspond au passage d'un état où l'un des interrupteurs du demi-pont est passant à un état où l'autre des interrupteurs du demi-pont est passant. Les étapes de chaque commutation permettent en particulier d'éviter que les deux interrupteurs du demi-pont soient passants en même temps au cours de la commutation. Par exemple pour faciliter ces étapes, on peut prévoir que chacun des interrupteurs du demi-pont soit un transistor comprenant une diode dont l'anode est formée par la source du transistor et la cathode est formée par le drain du transistor. Les modes de réalisation décrits sont compatibles avec les étapes usuelles de commutation d'un demi-pont commandé.

Chaque interrupteur 132H, 132L passe ainsi successivement de l'état passant à l'état bloqué. Cette succession d'états, ou cycle, est répétée à une fréquence f dite fréquence de découpage. Les états passant/bloqué de l'interrupteur 132H sont commandés avec un rapport cyclique a, défini à chaque cycle par le rapport entre la durée de l'état passant de l'interrupteur 132H et la durée totale du cycle. La fréquence de découpage et le rapport cyclique sont par exemple reçus par le circuit 140. Des exemples non limitatifs de circuits fournissant le rapport cyclique α sont décrits ci-après en relation avec les figures 3 à 6. En variante, le rapport cyclique est défini par le rapport entre la durée de l'état passant de l'interrupteur 132L et la durée totale du cycle.

La fréquence de découpage f est située dans une plage de fréquences de découpage strictement supérieures à la fréquence de la tension alternative, par exemple 10 fois, de préférence 100 fois, plus préférentiellement 1000 fois supérieures à la fréquence de la tension alternative. A titre d'exemple, la plage de fréquences de découpage est comprise entre 50 kHz et 10 MHz, préférentiellement entre 100 kHz et 3 MHz.

L'un des noeuds d'application de la tension d'alimentation (le noeud 102) est relié, de préférence connecté, au noeud 134. La liaison entre les noeuds 102 et 134 comprend, de préférence, un capteur de courant 150 (I). Le capteur 150 fournit à chaque instant la valeur Iin du courant entrant dans le dispositif 100 par le noeud 102. La liaison entre les noeuds 102 et 136 a, de préférence, une valeur de résistance inférieure à 10 mΩ, plus préférentiellement inférieure à 5 mΩ, même en présence du capteur de courant 150.

L'autre des noeuds d'application de la tension alternative (le noeud 104) est relié, de préférence connecté, au noeud 136 par un enroulement 162 d'un transformateur 160. Autrement dit, l'enroulement 162 est placé entre les noeuds 104 et 136. Le transformateur 160 comprend en outre un autre enroulement 164. Dans une variante, le capteur de courant 150, au lieu d'être entre les noeuds 102 et 134, est situé entre les noeuds 104 et le transformateur 160 ou entre le transformateur 160 et le noeud 136.

Le transformateur 160 présente une inductance de fuite, correspondant à un coefficient de couplage strictement inférieur à 1 présenté par le transformateur entre ses enroulements 162 et 164. Le transformateur présente de préférence, entre ses enroulements 162 et 164, un coefficient de couplage strictement inférieur à 1, par exemple entre 0,8 et 0,98. Le transformateur présente un tel coefficient de couplage pour au moins une fréquence de la plage de fréquences de découpage, par exemple pour toutes les valeurs de la plage de fréquence. Les effets du coefficient de couplage peuvent être obtenus en ajoutant une inductance externe en série.

Le dispositif 100 comprend en outre un circuit 170 relié, de préférence connecté, aux bornes de l'enroulement 164. Le circuit 170 est relié, de préférence connecté, aux bornes 106 et 108. Le circuit 170 est configuré pour fournir la tension fournie par le dispositif 100 entre les bornes 106 et 108.

Selon un mode de réalisation préféré, le circuit 170 comprend deux éléments capacitifs 172H et 172L, reliés, de préférence connectés, en série entre les bornes de sortie 106 et 108. Ainsi, un noeud 173 relie, de préférence connecte, en série les éléments capacitifs 172H et 172L. Les éléments capacitifs 172H et 172L peuvent chacun comprendre, ou être constitué par, un condensateur ou plusieurs condensateurs connectés en série et/ou en parallèle.

De préférence, le circuit 170 comprend deux interrupteurs, 174H et 174L, reliés, par exemple connectés, électriquement en série entres les bornes de sortie 106 et 108. Les interrupteurs 174H et 174L sont de préférence des transistors. Ainsi, un noeud 175 relie, de préférence connecte, électriquement en série les interrupteurs 174H et 174L. Les interrupteurs 174H et 174L sont commandés par un circuit de commande 176 (DRV), par exemple compris dans le circuit 170. Les interrupteurs 174H et 174L forment un demi-pont commandé. L'enroulement 164 relie, de préférence connecte, les noeuds 173 et 175 entre eux. Ainsi, les interrupteurs 174H et 174L relient, de préférence connectent, les bornes respectives 106 et 108 à l'enroulement 164. Autrement dit, les interrupteurs 174H et 174L sont placés entre les bornes respectives 106 et 108 et l'enroulement 164.

En fonctionnement, les commutations des interrupteurs 132H et 132L provoquent, dans l'enroulement 164, un courant 1164 circulant alternativement dans les deux sens à la fréquence de découpage f. A titre d'exemple, les instants de commutation des interrupteurs 174H et 174L sont déterminés, par exemple par le circuit 176, à partir d'une valeur de courant 1164 (capteur 177) et/ou à partir d'un signal de synchronisation 178 par rapport à la fréquence de découpage (par exemple provenant du circuit 140). A titre d'exemple, lorsque le courant 1164 circule du noeud 173 vers le noeud 175, l'interrupteur 174H est passant et l'interrupteur 174L est bloqué, ce qui provoque la charge de l'élément capacitif 172H. Lorsque le courant I164 circule du noeud 175 vers le noeud 173, l'interrupteur 174L est passant et l'interrupteur 174H est bloqué, ce qui provoque la charge de l'élément capacitif 172L. Ainsi, le circuit 170 reçoit le courant alternatif circulant dans l'enroulement 164 du transformateur 160, chaque capacité recevant le courant circulant dans l'un des deux sens, ce qui produit une tension continue positive entre les bornes de sortie 106 et 108, aux bornes de l'élément 110.

Le circuit 170 reçoit donc le courant circulant dans les deux sens de l'enroulement 164 et, à partir de ce courant, fournit la tension continue de sortie. Ainsi, le circuit 170 constitue un circuit de redressement double alternance fournissant la tension continue. Le mode de réalisation préféré décrit ci-dessus du circuit 170 n'est pas limitatif, le circuit 170 pouvant être remplacé par tout circuit adapté à recevoir le courant circulant dans l'enroulement 164, de préférence dans les deux sens. De préférence, un tel circuit comprend deux éléments capacitifs chacun agencé pour recevoir le courant circulant dans l'un des deux sens. De préférence, la circulation du courant dans l'un ou l'autre des deux sens est permise par la mise en conduction de l'un ou de l'autre de deux interrupteurs.

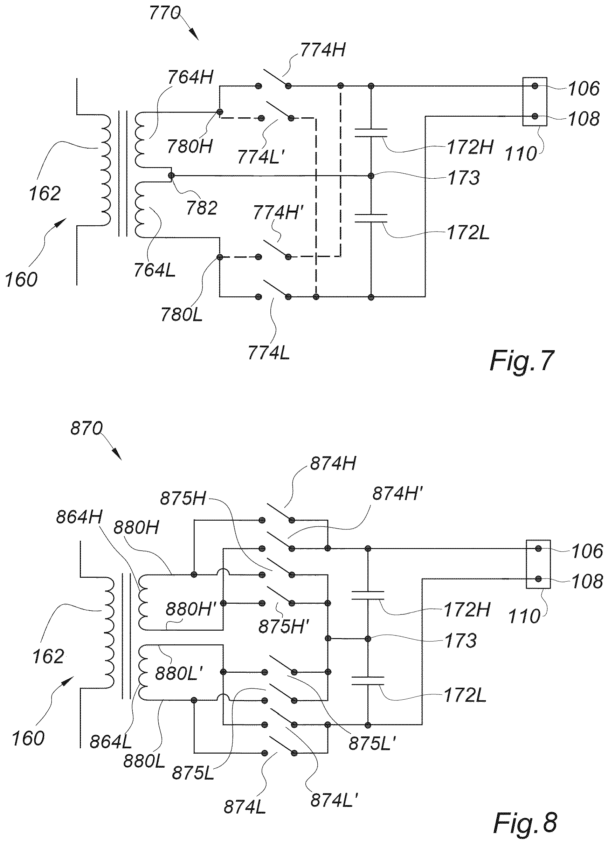

Le transformateur 160 peut comprendre, à la place de l'enroulement 164, plusieurs enroulements. Le circuit 10 peut alors être remplacé par tout circuit de redressement double alternance adapté à recevoir un ou plusieurs courants circulant dans ces enroulements. De préférence, la circulation de ce ou ces courants est permise par la mise en conduction d'interrupteurs. Des exemples de tels circuits pouvant remplacer le circuit 170 sont décrits ci-après en relation avec les figures 7 et 8.

En outre, bien que l'on ait décrit ici un transformateur à seulement deux enroulements, et un seul circuit de réception des courants circulant dans le transformateur, on peut prévoir un transformateur à plus de deux enroulements. On peut alors prévoir plusieurs circuits de réception des courants circulant dans les enroulements du transformateur. En variante, on peut remplacer le transformateur par plusieurs transformateurs ayant des enroulements en série entre les noeuds 104 et 136.

Le dispositif 100 comprend en outre un circuit 180 (CTRL). Le circuit 180 reçoit la valeur Vs de la tension de sortie fournie par le dispositif 100 entre les bornes de sortie 106 et 108. La valeur Vs est par exemple fournie par un capteur de tension 182 (V) connecté aux bornes 106 et 108. Le circuit 180 commande la tension de sortie. De préférence, le circuit 180 permet d'ajuster, ou réguler, la tension de sortie, c'est-à-dire d'obtenir que la valeur Vs de la tension de sortie soit égale à une valeur de consigne Vref. De préférence, la valeur de consigne Vref est constante, c'est-à-dire correspond à une tension de sortie continue, par exemple de 5 V. Ceci n'est pas limitatif, la valeur de la consigne Vref pouvant varier au cours du temps.

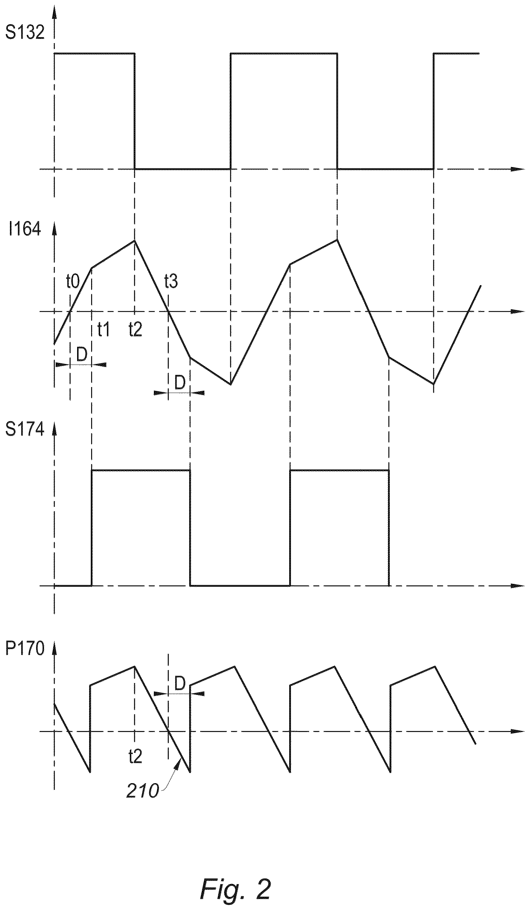

Selon un mode de réalisation, afin d'obtenir l'égalité entre valeurs de tension Vs et de consigne Vref, le circuit 180 agit sur la fréquence du courant alternatif I164, c'est-à-dire la fréquence de découpage f du demi-pont des interrupteurs 132H et 132L. Si la valeur Vs est inférieure à la valeur de consigne Vref, on diminue la fréquence f. Comme ceci est illustré ci-après en relation avec la figure 2, ceci augmente la valeur Vs de la tension de sortie. De manière similaire, si la valeur Vs est inférieure à la valeur de consigne Vref, on augmente la fréquence f. Il en résulte une diminution de la valeur Vs de la tension de sortie. Ainsi, la fréquence f joue le rôle d'une variable d'ajustement, sur laquelle on agit pour réguler la valeur Vs en fonction de la valeur de consigne. La manière d'obtenir une variable d'ajustement à partir d'une valeur à réguler et d'une valeur de consigne, n'est pas décrite ici en détail, les modes de réalisation décrits étant compatibles avec les procédés usuels d'obtention d'une variable d'ajustement à partir d'une valeur à réguler et d'une valeur de consigne.

Selon un mode de réalisation, afin d'obtenir l'égalité entre les valeurs de tension Vs et de consigne Vref, le circuit 180 agit sur un déphasage D entre le courant alternatif I164 et les cycles de réception des deux sens de ce courant. Autrement dit, les cycles de commutation des interrupteurs 174H et 174L sont déphasés par rapport aux alternances entre les deux sens du courant alternatif I164. Le déphasage D correspond à un retard entre l'instant où le courant I164 change de sens et l'instant suivant de la commutation des interrupteurs 174H et 174L. Si la valeur Vs est supérieure à la valeur de consigne Vref, on augmente le déphasage D. Comme ceci est illustré ci-après en relation avec la figure 2, il en résulte une diminution de la valeur Vs de la tension de sortie. De manière similaire, si la valeur Vs est inférieure à la valeur de consigne Vref, on diminue le déphasage D, et il en résulte une augmentation de la valeur Vs de la tension de sortie. Ainsi, le déphasage D joue le rôle d'une variable d'ajustement, sur laquelle on agit pour réguler la valeur Vs en fonction de la valeur de consigne.

En variante, le circuit 180 fournit deux valeurs de déphasage. L'une des valeurs de déphasage correspond au retard de l'instant où l'interrupteur 174L devient passant et l'interrupteur 174H devient bloqué par rapport à l'instant où le courant I164 commence à circuler du noeud 173 vers le noeud 175. L'autre des valeurs de déphasage correspond au retard de l'instant où l'interrupteur 174H devient passant et l'interrupteur 174L devient bloqué par rapport à l'instant où le courant I164 commence à circuler du noeud 175 vers le noeud 173.

Ainsi, de préférence, le circuit 180 régule la valeur Vs de la tension de sortie par rapport à la valeur de consigne Vref en agissant sur la fréquence f et/ou sur le déphasage D. Plus préférentiellement, pour réguler la valeur Vs de la tension de sortie par rapport à la valeur de consigne Vref, le circuit 180 agit sur la fréquence f et sur le déphasage D, simultanément ou à tour de rôle. En variante, le circuit 180 commande la valeur Vs sans la réguler. Dans cette variante, les valeurs de fréquence f et de déphasage D correspondant à la valeur souhaitée de la tension Vs sont prédéfinies en fonction de divers paramètres de fonctionnement, tels que la valeur d'un courant fourni, de tension reçue et/ou de courant reçu par le dispositif 100.

De préférence, on choisit un seuil de fréquence, par exemple la limite supérieure d'une plage de fréquences de découpage, et un seuil de déphasage, par exemple le déphasage nul. Dans un premier mode de fonctionnement, le circuit 180 agit sur la fréquence f en maintenant le déphasage D égal au seuil de déphasage, tant que la fréquence f reste strictement inférieure au seuil de fréquence. Si la fréquence f atteint le seuil de fréquence, le circuit 180 passe dans un deuxième mode de fonctionnement. Dans le deuxième mode de fonctionnement, le circuit 180 agit sur le déphasage D en maintenant la fréquence f égale au seuil de fréquence, tant que le déphasage D reste strictement supérieur au seuil de déphasage. Si le déphasage D atteint le seuil de déphasage, le circuit 180 passe dans le premier mode de fonctionnement.

Pour obtenir une tension régulée à partir de la tension alternative, on aurait pu prévoir un étage d'entrée permettant d'alimenter un stockage d'énergie tel qu'un condensateur à partir de la tension alternative, puis un étage de sortie convertissant la tension du stockage d'énergie en tension de sortie régulée.

Par rapport à un tel dispositif à stockage d'énergie entre deux étages, le dispositif 100 comprend moins d'interrupteurs et a un rendement énergétique plus élevé. Le nombre plus faible d'interrupteurs permet, pour une même puissance fournie, d'obtenir un dispositif plus compact. Le rendement plus élevé permet d'économiser l'énergie et de réduire l'échauffement en fonctionnement.

De préférence, le dispositif 100 est situé dans une prise murale non ventilée. Le fait d'augmenter la compacité et de réduire l'échauffement en fonctionnement facilite la réalisation d'une prise murale non ventilée comprenant un dispositif tel que le dispositif 100.

De préférence, le dispositif 100 comprend en outre des circuits, non représentés, configurés pour obtenir une tension nulle entre les bornes de chacun des interrupteurs 132H et 132L au moment des commutations. Un tel mode de fonctionnement d'un demi-pont d'interrupteurs est dit de type ZVS "Zéro Voltage Switching". Les modes de réalisation décrits sont compatibles avec les circuits usuels de commutation de type ZVS. Ceci permet de réduire les dimensions des composants et/ou d'augmenter le rendement et/ou d'augmenter la limite supérieure de la plage de fréquences de découpage.

La figure 2 est un chronogramme représentant schématiquement un fonctionnement du dispositif de la figure 1. Plus précisément, la figure 2 représente des allures d'un signal de commande S132 de l'interrupteur 132H, du courant I164 dans l'enroulement 164, d'un signal de commande S174 de l'interrupteur 174H, et d'une puissance P170 reçue par le circuit 170 (ici par les éléments capacitifs 172H et 172L). Le courant I164 est représenté en valeurs algébriques, les valeurs positives correspondant au sens de circulation du noeud 173 au noeud 175, et les valeurs négatives correspondant à l'autre sens.

Deux cycles de commutation des interrupteurs 132L et 132H sont représentés. Les tensions dans les éléments capacitifs 120, 172H, 172L, et la tension alternative d'entrée n'ont pas le temps de varier sensiblement au cours de ces deux cycles. L'exemple représenté se situe au cours d'une alternance positive de la tension d'entrée (potentiel du noeud 102 supérieur à celui du noeud 104), et pour un rapport cyclique α de l'ordre de 0,5.

Le signal S132 est initialement à un niveau haut, et ainsi l'interrupteur 132H est passant et l'interrupteur 132L est bloqué. Ceci provoque une augmentation du courant I164. Le coefficient de couplage choisi du transformateur, strictement inférieur à 1, permet de limiter la vitesse à laquelle le courant I164 augmente, grâce à l'inductance de fuite résultant de ce coefficient de couplage.

Le courant I164, initialement à une valeur négative, s'annule à un instant t0. A un instant t1, après un retard correspondant au déphasage D, le signal S174, initialement à un niveau bas, passe à un niveau haut. Ainsi, l'interrupteur 174H devient passant, et l'interrupteur 174L passe à l'état bloqué. A partir de l'instant t1, le courant I164 augmente moins vite qu'entre les instants t0 et t1. A partir de l'instant t1, le circuit 170 reçoit de la puissance, et cette puissance reçue P170 augmente.

A un instant t2, le signal S132 passe à un niveau bas. Ainsi l'interrupteur 132H passe à l'état bloqué et l'interrupteur 132L devient passant. A partir de cet instant, le courant I164 diminue après avoir atteint une valeur maximale, de même que la puissance reçue P170. Moins la fréquence f est élevée, plus le courant I170 a le temps d'augmenter, et plus la valeur maximale atteinte par le courant est élevée. Autrement dit, moins la fréquence f est élevée, et moins l'impédance liée à l'inductance de fuite est élevée, ce qui augmente le courant I164. Ainsi, les valeurs maximales de puissance reçue augmentent. Une diminution de la fréquence f provoque ainsi une augmentation de la valeur Vs de tension de sortie. De même, une augmentation de la fréquence f provoque une diminution la valeur Vs de tension de sortie.

A un instant t3, le courant I164 s'annule. Après l'instant t3, tant que le retard correspondant au déphasage D n'est pas écoulé, les interrupteurs 174H et 174L restent aux états respectivement passant et bloqué. Le sens du courant s'inverse, c'est-à-dire que la capacité 172H se décharge. Ceci correspond à une puissance renvoyée par le circuit 170 vers le transformateur 160. La puissance P170, en valeurs algébriques, prend alors des valeurs négatives 210. Plus le déphasage D est élevé, plus la puissance renvoyée par le circuit 170 augmente. Il en résulte une diminution de la valeur Vs de tension de sortie. De même, une diminution du déphasage D provoque une augmentation de la tension de sortie.

La figure 3 représente, de manière partielle et schématique, un mode de réalisation d'un dispositif 300 d'alimentation électrique à partir d'une tension alternative de valeur Vin.

Le dispositif 300 comprend les mêmes éléments que le dispositif 100 de la figure 1, agencés de manière identique ou similaire. Ces éléments ne pas décrits ici à nouveau. Les circuits 138, 140, 176 et 180 n'ont pas été représentés en figure 3. Le dispositif 300 correspond au dispositif 100 dans lequel des éléments ont en outre été ajoutés. Plus précisément, ces éléments ajoutés constituent un exemple de circuits adaptés à produire une valeur du rapport cyclique α de commutation des interrupteurs 132H et 132L.

Le dispositif 300 comprend un circuit 310 (CTRL) recevant la valeur Iin du courant d'entrée, fournie par le capteur de courant 150. Le circuit 310 fournit le rapport cyclique a. Plus précisément, le circuit 310 est configuré pour obtenir une égalité entre la moyenne de la valeur Iin au cours de chaque cycle de commutation des interrupteurs 132H et 132L, c'est-à-dire une moyenne mobile, ou moyenne glissante, de Iin, et une valeur de consigne de courant Iref. A titre d'exemple, la moyenne mobile est obtenue par filtrage de la valeur Iin par un filtre passe-bas, par exemple de fréquence de coupure inférieure à la fréquence f.

Pour obtenir l'égalité entre la moyenne mobile de la valeur Iin et la valeur de consigne Iref, le circuit 310 agit sur le rapport cyclique a. Autrement dit, le circuit 310 utilise le rapport cyclique α comme variable d'ajustement pour réguler le courant d'entrée en fonction de la valeur de consigne Iref.

De préférence, la valeur de consigne Iref correspond au résultat de la multiplication (circuit multiplicateur 320) de la valeur Vin de la tension alternative d'entrée par une valeur de conductance G (Iref = G*Vin) . Ainsi, la valeur Iin du courant entrant par le noeud 102, c'est-à-dire fourni par exemple par le réseau électrique, est proportionnelle à la tension alternative. Ceci permet d'éviter de créer diverses puissances réactives dans le réseau électrique. Ceci permet au dispositif 300 d'être facilement rendu conforme à diverses normes concernant les niveaux d'harmoniques du courant consommé sur un réseau électrique, telles que la norme EN 61000-3-2.

De préférence, le dispositif comprend en outre un circuit 330 (MAX) relié, par exemple connecté, aux bornes 122H et 122L de l'élément capacitif 120. A titre d'exemple, le circuit 330 fournit la valeur maximale VM de la tension entres les bornes 122H et 122L atteinte au cours de chaque alternance de la tension alternative d'entrée. La valeur VM est reçue par un circuit 340 (CTRL) qui fournit la valeur de conductance G. Le circuit 340 est configuré pour obtenir une égalité entre la valeur VM et une consigne VCref, en agissant sur la valeur de conductance G. Autrement dit, le circuit 340 utilise la conductance G comme variable d'ajustement pour réguler la charge de l'élément capacitif 120 en fonction de la valeur de consigne Iref. Le circuit 340 est compatible avec les procédés connus d'obtention d'une variable d'ajustement à partir d'une valeur à réguler et d'une valeur de consigne. Bien qu'à titre d'exemple particulier, la valeur régulée par le circuit 340 soit la valeur VM, la valeur régulée par le circuit 340 peut être toute valeur représentative du niveau de tension de l'élément capacitif 120, ou toute valeur dont les variations sont liées à celles de ce niveau de tension.

Dans les modes de réalisation décrits ci-dessus en relation avec les figures 1 et 3, on a décrit des circuits 138, 140, 176, 180, 310, 320, 330 et 340 distincts, c'est-à-dire un ensemble de circuits. Selon d'autres modes de réalisation, tout ou partie de ces circuits sont remplacés par un circuit numérique comprenant une mémoire et une unité de traitement telle qu'un microprocesseur. Ce circuit numérique est configuré pour effectuer les fonctions des circuits qu'il remplace, c'est-à-dire que la mémoire comprend un programme dont l'exécution par l'unité de traitement provoque la mise en oeuvre des fonctions décrites ci-dessus.

La figure 4 représente, de manière partielle et schématique, un mode de réalisation d'un dispositif 400 d'alimentation électrique à partir d'une tension alternative.

Le dispositif 400 comprend des éléments identiques ou similaires à ceux du dispositif 100 de la figure 1, agencés de manière identique ou similaire. Ces éléments ne sont pas décrits à nouveau en détail.

Le dispositif 400 comprend un circuit 410 (CTRL) comprenant une mémoire 412 (MEM) et une unité de traitement 414 (CPU). De préférence, tout ou partie des fonctions des circuits 138, 140, 176, 180 décrits en relation avec la figure 1 sont réalisées par le circuit 410. Plus préférentiellement, tout ou partie des fonctions des circuits 138, 140, 176, 180 décrits ci-dessus en relation avec la figure 3 sont en outre réalisées par le circuit 410.

De préférence, le dispositif 400 comprend en outre un élément capacitif 420 reliant, de préférence connectant, les bornes 104 et 122L. En variante, le dispositif 400 comprend un élément capacitif 422 (en pointillés) reliant, de préférence connectant, les bornes 104 et 122H. Plus préférentiellement, le dispositif 400 comprend à la fois l'élément capacitif 420 et l'élément capacitif 422. L'élément capacitif 420 et/ou 422 comprend, ou est constitué par, un condensateur, ou des condensateurs connectés électriquement en série et/ou en parallèle.

Le dispositif 400 comprend en outre un capteur de tension 430 qui fournit une valeur V420 de la tension aux bornes de l'élément capacitif 420, et un capteur de tension 332 qui fournit une valeur V120 de tension aux bornes de l'élément capacitif 120. En variante, le capteur de tension 332 est remplacé par un capteur de la tension aux bornes de l'élément capacitif 422.

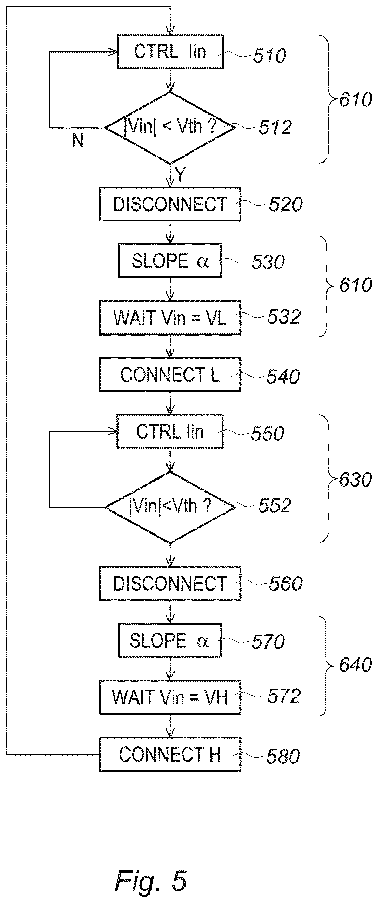

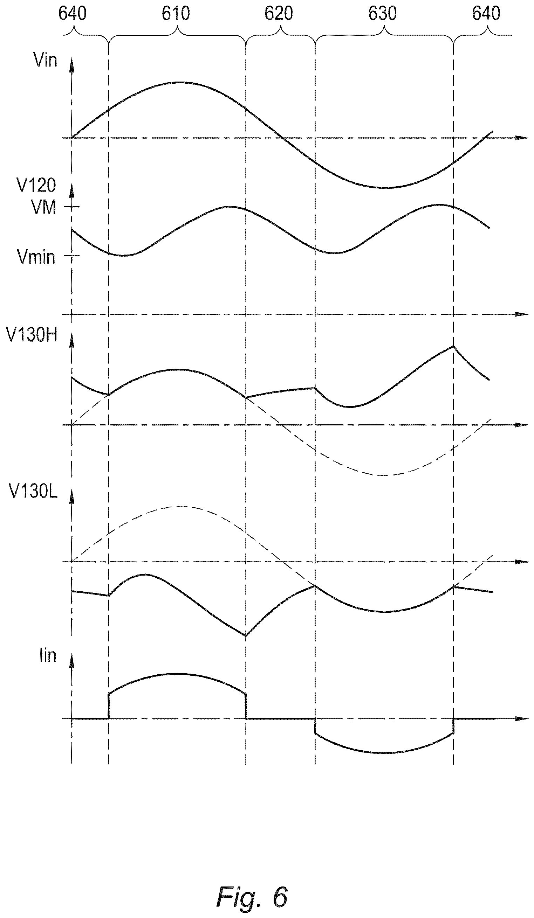

La figure 5 illustre un exemple de procédé mis en oeuvre par le dispositif 400 de la figure 4. Plus précisément, l'exécution d'un programme contenu dans la mémoire 412 par l'unité de traitement 414 provoque l'exécution du procédé de la figure 5. La figure 6 est un chronogramme illustrant le fonctionnement du dispositif 400 lorsque le procédé de la figure 5 est mis en oeuvre. Plus précisément, la figure 6 représente, au cours de deux alternances opposées consécutives, positive et négative, de la tension alternative d'entrée, la valeur Vin de la tension alternative d'entrée, la tension V120 aux bornes de l'élément capacitif 120, les tensions V130H et V130L aux bornes des interrupteurs respectifs 130H et 130L, et la valeur algébrique Iin du courant entrant par la borne d'entrée 102.

La tension alternative d'entrée prend successivement, en valeur absolue, des valeurs relativement faibles (au début et à la fin de chaque alternance) et relativement élevées (au milieu de chaque alternance). L'élément capacitif 120 reçoit de l'énergie lorsque la tension alternative a des valeurs élevées, et restitue cette énergie lorsque la tension alternative a des valeurs faibles. Pour que l'élément capacitif 120 puisse jouer ce rôle, on choisit pour l'élément capacitif 120 une valeur de capacité supérieure à 100 nF, par exemple inférieure à 100 µF, et de préférence inférieure à 10 µF.

Des phases de stockage et de déstockage, il résulte des variations de la tension de l'élément capacitif 120, à une fréquence double de celle de la tension alternative Vin. La tension varie entre une valeur minimale Vmin et la valeur maximale VM.

La différence entre les valeurs maximale et mimimale correspond à une amplitude de variation de tension aux bornes de l'élément capacitif 120. Cette amplitude peut être augmentée par rapport à celle d'un élément de stockage d'un dispositif à stockage d'énergie entre deux étages tel que mentionné ci-dessus, dans lequel des variations trop fortes de la tension du stockage d'énergie poseraient des problèmes de fonctionnement du deuxième étage. De préférence, on choisit la valeur de capacité de l'élément capacitif 120 pour que l'amplitude des variations de tension soit supérieure à 10 % de la valeur maximale VM, lorsque le dispositif fonctionne à une puissance maximum. A titre d'exemple, cette valeur de capacité est inférieure à 100 µF, de préférence inférieure à 10 µF. L'élément capacitif 120 peut alors être constitué d'un ou plusieurs condensateurs de type céramique, ce qui permet une durée de vie et un rendement améliorés par rapport à des condensateurs chimiques.

Dans une phase de fonctionnement 610 située dans une partie centrale de l'alternance positive, l'interrupteur 130H est à l'état passant et l'interrupteur 130L est à l'état bloqué. Le procédé comprend deux étapes 510 et 512 au cours de la phase 610.

A l'étape 510 (CTRL Iin), on agit sur la valeur du rapport cyclique α permettant d'obtenir le courant Iin égal à la valeur de consigne Iref (égale à G*Vin) en moyenne sur chaque cycle de commutation des interrupteurs 132H et 132L. Ceci correspond à la fonction du circuit 310 de la figure 3.

A l'étape 512 (IVinl<Vth?), on compare la valeur Vin de la tension alternative d'entrée à un seuil de tension Vth. Si la valeur Vin est supérieure au seuil Vth (N), le procédé retourne à l'étape 510. Sinon, le procédé passe à une étape 520 (DISCONNECT) qui met fin à la phase de fonctionnement 610.

En variante, les étapes 510 et 512 sont exécutées en parallèle jusqu'à ce que l'étape 512 ait pour résultat que la valeur Vin est inférieure au seuil Vth.

La valeur de conductance G ne varie sensiblement pas au cours des deux alternances consécutives. De ce fait, les valeurs Iin et Vin sont proportionnelles au cours de la phase 610. Dans le cas représenté d'une tension alternative sinusoïdale, le courant d'entrée suit une portion de sinusoïde en phase avec la tension d'entrée.

Une phase de fonctionnement 620 commence par l'étape 520. A cette étape, les interrupteurs 130H et 130L sont rendus tous deux non passants. Ainsi, la borne d'entrée 102 est déconnectée, et le courant Iin reste nul durant toute la phase 620.

A titre d'exemple, le procédé comprend, pendant la phase 620, deux étapes successives 530 et 532.

Au cours de l'étape 530 (SLOPE a), le rapport cyclique est amené progressivement à une valeur prédéfinie, c'est-à-dire que le rapport cyclique est amené à la valeur prédéfinie en en temps supérieur, par exemple de plus de 10 fois supérieur, à celui d'un cycle de commutation des interrupteurs 132H et 132L. De préférence, le rapport cyclique est amené à la valeur prédéfinie en un temps supérieur à plus de 10 % de la durée de la phase de fonctionnement 620, plus préférentiellement, en plus de la moitié de la durée de la phase de fonctionnement 620.

Au cours de l'étape 530 (WAIT Vin=VL), on maintient le rapport cyclique à la valeur prédéfinie de rapport cyclique, et on attend que les tensions Vin et V130L deviennent égales, ou sensiblement égale. La tension V130L correspond à la valeur V420 de tension aux bornes de l'élément capacitif 420. Après cette étape, le procédé passe à une étape 540 (CONNECT L) qui met fin à la phase 620.

A l'étape 540, on rend passant l'interrupteur 130L. L'interrupteur 130H est laissé non passant. Le fait d'attendre que les tensions Vin et V130L soient sensiblement égales permet de réduire à presque zéro les courants de charge ou de décharge de l'élément capacitif 420 par l'interrupteur 130H à l'instant où l'interrupteur 130H est rendu passant. On évite ainsi divers problèmes de rendement et/ou d'endommagement des composants du dispositif.

L'étape 540 marque le début d'une phase de fonctionnement 630, similaire ou identique à la phase de fonctionnement 610, à la différence que l'interrupteur 130L est passant et l'interrupteur 130H est non passant. La phase de fonctionnement 630 comprend des étapes 550 et 552 similaires ou identiques respectivement aux étapes 510 et 512. La phase de fonctionnement 630 d'achève à une étape 560 (DISCONNECT), similaire ou identique à l'étape 520.

Une phase de fonctionnement 640 débute à l'étape 560, à laquelle les interrupteurs 130H et 130L sont rendus non passants. De même qu'au cours de la phase 620, le courant Iin est nul. Comme la phase 620, la phase 640 comprend deux étapes 570 et 572. L'étape 570 (SLOPE a) est identique ou similaire à l'étape 530.

Au cours de l'étape 572 (WAIT Vin=VH), on maintient le rapport cyclique à une valeur prédéfinie de rapport cyclique, et on attend que la tension alternative Vin et la tension V130H aux bornes de l'interrupteur 130H deviennent égales, ou sensiblement égales. La valeur de tension V130H correspond à la différence entre les valeurs de tension tensions V120 et V420.

Après l'étape 572, le procédé passe à une étape 580 (CONNECT H) qui met fin à la phase 640 et débute une nouvelle phase 610. A l'étape 580, on rend l'interrupteur 130L passant. L'interrupteur 130H est laissé non passant.

Ainsi, par rapport au fonctionnement du dispositif 300 de la figure 3, on a limité aux seules phases 610 et 630 la fonction du circuit 310, c'est-à-dire la fonction d'agir sur le rapport cyclique pour obtenir la valeur Iin du courant d'entrée égale à une valeur de consigne. Les phases 610 et 630, situées au centre de chaque alternance, sont alternées avec des phases de transition, au cours desquelles le courant alternatif Iin est annulé. Ceci permet d'éviter des modes de fonctionnement dans lesquels le rapport cyclique se rapproche de l'une des valeurs 0 et 1. La mise en oeuvre de la commutation des interrupteurs 132H et 132L est donc plus simple dans le dispositif 400 des figures 4, 5 et 6 que dans le dispositif 300 de la figure 3.

De préférence, la valeur prédéfinie du rapport cyclique atteinte au cours de l'étape 532 est choisie de sorte que la tension aux bornes de l'interrupteur 130L à l'étape 540 (c'est-à-dire la tension V420) a une valeur de tension prédéfinie. De préférence, la valeur prédéfinie du rapport cyclique atteinte au cours de l'étape 572 est choisie de sorte que la tension aux bornes de l'interrupteur 130H à l'étape 580 (c'est-à-dire la tension V420) ait, en valeur absolue, la même valeur de tension prédéfinie.

Bien que, dans l'exemple ci-dessus, chaque phase 620, 640 comprenne deux étapes distinctes, on peut replacer ces deux étapes par toute étape permettant à la tension respective V130L, V130H d'atteindre à la fin de la phase la valeur de tension prédéfinie.

De préférence, la valeur de tension prédéfinie commune aux étapes 532 et 572 est égale à la tension de seuil Vth déterminant le début des phases 620 et 640, ce qui permet d'obtenir des périodes 620 chacune symétrique par rapport au moment où la tension alternative Vin s'annule. Ceci permet de réduire, dans le courant Iin, les harmoniques d'ordre pair.

De préférence la valeur de tension prédéfinie commune aux étapes 532 et 572 et le seuil de tension Vth sont choisis de sorte que les phases 620 et 640 soit suffisamment courtes pour que les niveaux d'harmonique du courant soient compatibles avec des normes telles que le norme EN 61000-3-2 susmentionnée.

La figure 7 représente un exemple d'un circuit 770 de redressement double alternance pouvant remplacer le circuit 170 du dispositif de la figure 1, dans le cas où le transformateur 160 comprend, à la place de l'enroulement 164 (figure 1), deux enroulements 764H et 764L électriquement en série entre deux bornes 780H et 780L.

Le circuit 770 comprend des éléments identiques ou similaires à ceux du circuit 170 de la figure 1, agencés de manière identique ou similaire. Ces éléments ne sont pas décrits à nouveau en détail. Seules les différences sont mises en exergue.

Le circuit 770 de la figure 7 diffère du circuit 170 de la figure 1 en ce que :
- les interrupteurs 174H et 174L (figure 1) sont remplacés par un interrupteur 774H reliant, de préférence connectant, la borne 180H à la borne de sortie 106, et un interrupteur 774L reliant, de préférence connectant, la borne 180L à la borne de sortie 108 ; et
- le noeud 173 de liaison en série des éléments capacitifs 172H et 172L est relié, de préférence connecté, à un noeud 782 de liaison en série des enroulements 764H et 764L.

Dans une variante, représentée en pointillés, le circuit 770 comprend en outre un interrupteur 774L' reliant la borne 780H à la borne de sortie 108, et, de préférence, un interrupteur 774H' reliant la borne 780L à la borne de sortie 106.

En fonctionnement, les interrupteurs 774H et 774L sont commandés d'une manière identique ou similaire à celle décrite ci-dessus pour les interrupteurs 174H et 174L.

La figure 8 représente un autre exemple d'un circuit 870 de redressement double alternance pouvant remplacer le circuit 170 du dispositif de la figure 1, également dans le cas où le transformateur 160 comprend, à la place de l'enroulement 164 (figure 1), deux enroulements 864H et 864L. L'enroulement 864H a des bornes 880H et 880H', et l'enroulement 864L a des bornes 880L et 880L'.

Le circuit 870 comprend des éléments identiques ou similaires à ceux du circuit 170 de la figure 1, agencés de manière identique ou similaire. Ces éléments ne sont pas décrits à nouveau en détail. Seules les différences sont mises en exergue.

Le circuit 870 diffère du circuit 170 de la figure 1 en ce que les interrupteurs 174H et 174L (figure 1) sont remplacés par :
- un interrupteur _874H reliant, de préférence connectant, la borne 180H à la borne de sortie 106, et un interrupteur 874L reliant, de préférence connectant, la borne 180L à la borne de sortie 108 ;
- un interrupteur _874H' reliant, de préférence connectant, la borne 180H' à la borne de sortie 106, et un interrupteur 874L' reliant, de préférence connectant, la borne 180L' à la borne de sortie 108 ;
- un interrupteur _875H reliant, de préférence connectant, la borne 180H au noeud 173 et un interrupteur 875L reliant, de préférence connectant, la borne 180L au noeud 173 ; et
- un interrupteur _875H' reliant, de préférence connectant, la borne 180H' au noeud 173 et un interrupteur 875L' reliant, de préférence connectant, la borne 180L' au noeud 173.

En fonctionnement, les interrupteurs 874H et 874L, ainsi que les interrupteurs 874H' et 874L', sont commandés d'une manière identique ou similaire à celle décrite ci-dessus pour les interrupteurs 174H et 174L.

Divers modes de réalisation et variantes ont été décrits. En particulier, chacune des valeurs décrites ci-dessus et fournies par des capteurs tels que les capteurs 105, 150, 182 et 430, ou par des circuits tels que les circuits 138, 140, 170, 180, 310, 320, 330, 340, ou 410, peut être remplacée par toute valeur représentative de la valeur décrite ci-dessus.

Enfin, la mise en oeuvre pratique des modes de réalisation et variantes décrits est à la portée de l'homme du métier à partir des indications fonctionnelles données ci-dessus.

## Revendications

1. Dispositif de fourniture d'une tension continue entre deux bornes de sortie (104, 106) à partir d'une tension alternative appliquée sur des bornes d'entrée (102, 104), comprenant :
- un premier élément capacitif (120) ;
- deux premiers interrupteurs (132H, 132L) en demi-pont entre des bornes du premier élément capacitif (120) ;
- deux deuxièmes interrupteurs (130H, 130L) électriquement en série entre les bornes (132H, 132L) du premier élément capacitif (120) ;
- un transformateur (160), comprenant un premier enroulement (162) placé entre un noeud (136) de liaison entre les premiers interrupteurs (132H, 132L) et l'une des bornes (104) d'entrée, l'autre des bornes d'entrée (102) étant reliée à un noeud (134) de liaison entre les deuxièmes interrupteurs ;
- un circuit de redressement double alternance (170) fournissant la tension continue, comprenant :
o deux deuxièmes éléments capacitifs (172H, 172L) électriquement en série entre les bornes de sortie ; et
o deux troisièmes interrupteurs (174H, 174L) chacun placé entre l'une des bornes de sortie et un deuxième enroulement (164) du transformateur ;
- un circuit (140, 138 ; 410) configuré pour commuter les premiers interrupteurs (132H, 132L) à une fréquence (f) et commander les deuxièmes interrupteurs ;
- un circuit (176 ; 410) configuré pour commander la tension fournie par le dispositif, agissant sur ladite fréquence (f) et/ou sur un retard entre un instant où un courant alternatif circulant dans le deuxième enroulement (164) change de sens et un instant suivant de commutation des troisièmes interrupteurs (174H, 174L).

2. Dispositif selon la revendication 1, comprenant :
- un capteur de tension (182) fournissant une valeur de la tension continue ; et
- un circuit (180) configuré pour agir sur ladite fréquence et/ou sur ledit retard à partir de la valeur de la tension continue.

3. Dispositif selon la revendication 1, comprenant un circuit (138 ; 410) configuré pour, à chaque alternance de la tension alternative, rendre passant un seul des deuxièmes interrupteurs pendant au moins une phase centrale (610, 630) de l'alternance, ledit seul des deuxièmes interrupteurs étant fonction du signe de l'alternance.

4. Dispositif selon l'une quelconque des revendications 1 à 3, comprenant un circuit (310, 320 ; 410) configuré pour réguler une moyenne mobile d'un courant circulant par les bornes d'entrée (102, 104), en fonction d'une consigne de courant (Iref), en agissant sur un rapport cyclique (α) de la commutation des premiers interrupteurs (132H, 132L).

5. Dispositif selon la revendication 4, dans lequel la consigne de courant (Iref) a une valeur représentative d'un résultat de multiplication d'une valeur de conductance (G) par une valeur (Vin) de la tension alternative.

6. Dispositif selon la revendication 5, comprenant un circuit (330, 340 ; 410) configuré pour réguler une valeur (VM, V120) de tension du premier élément capacitif (120) en agissant sur ladite valeur de conductance (G).

7. Dispositif selon la revendication 6, comprenant, pour au moins l'une des bornes (122L) du premier élément capacitif (122), un élément capacitif supplémentaire (420) reliant à la borne du premier élément capacitif (120) ladite l'une des bornes d'entrée (104).

8. Dispositif selon l'une quelconque des revendications 3 à 7, comprenant un circuit (410) configuré pour bloquer les deuxièmes interrupteurs (130H, 130L) pendant des phases de transition (620, 640) entre lesdites phases centrales (610, 630) .

9. Dispositif selon la revendication 8, comprenant un circuit configuré pour, à chaque phase de transition (620, 640), faire varier progressivement un rapport cyclique (α) de la commutation des premiers interrupteurs (132H, 132L), de manière à obtenir une valeur prédéfinie de tension aux bornes de celui des deuxièmes interrupteurs (130H, 130L) qui sera rendu passant pendant la phase centrale (610, 630) suivant la phase de transition.

10. Dispositif selon la revendication 9, dans lequel la phase centrale (610, 630) suivant chaque phase de transition (620, 640) commence au moment où la tension alternative a ladite valeur prédéfinie de tension.

11. Dispositif selon la revendication 9 ou 10, dans lequel la phase de transition (620, 640) suivant chaque phase centrale commence au moment où la tension alternative a ladite valeur prédéfinie (610, 630).

12. Dispositif selon l'une quelconque des revendications 1 à 11, comprenant un circuit configuré pour obtenir une tension nulle entre les bornes de chacun des premiers interrupteurs (132H, 132L) aux moments des commutations.

13. Dispositif selon l'une quelconque des revendications 1 à 12, dans lequel le transformateur (160) a un coefficient de couplage strictement inférieur à 1.

14. Dispositif selon l'une quelconque des revendications 1 à 13, dans lequel les premiers interrupteurs (132H, 132L) sont des transistors de type HEMT.

15. Dispositif d'alimentation par prise USB-C comprenant un dispositif selon l'une quelconque des revendications 1 à 14.

## Patentansprüche

1. Vorrichtung zum Liefern einer Gleichspannung zwischen zwei Ausgangsanschlüssen (104, 106) aus einer Wechselspannung, die an Eingangsanschlüsse (102, 104) angelegt wird, aufweisend:
- ein erstes kapazitives Element (120);
- zwei erste Schalter (132H, 132L) in einer Halbbrücke zwischen Anschlüssen des ersten kapazitiven Elements (120);
- zwei zweite Schalter (130H, 130L), die elektrisch in Reihe zwischen den Anschlüssen (132H, 132L) des ersten kapazitiven Elements (120) geschaltet sind;
- einen Transformator (160), der eine erste Wicklung (162) aufweist, die zwischen einem Verbindungsknoten (136) zwischen den ersten Schaltern (132H, 132L) und einem der Eingangsanschlüsse (104) angeordnet ist, wobei der andere der Eingangsanschlüsse (102) mit einem Verbindungsknoten (134) zwischen den zweiten Schaltern gekoppelt ist;
- eine Vollwellen-Gleichrichterschaltung (170), die die Gleichspannung liefert, aufweisend:
• zwei zweite kapazitive Elemente (172H, 172L), die elektrisch in Reihe zwischen den Ausgangsanschlüssen geschaltet sind; und
• zwei dritte Schalter (174H, 174L), die jeweils zwischen einer der Ausgangsklemmen und einer zweiten Wicklung (164) des Transformators angeordnet sind;
- eine Schaltung (140, 138; 410), die konfiguriert ist zum Schalten der ersten Schalter (132H, 132L) mit einer Frequenz (f) und zum Steuern der zweiten Schalter;
- eine Schaltung (176; 410), die konfiguriert ist zum Steuern der von der Vorrichtung gelieferte Spannung, indem sie auf die Frequenz (f) und/oder auf eine Verzögerung zwischen einem Zeitpunkt, zu dem ein durch die zweite Wicklung (164) fließender Wechselstrom die Richtung ändert, und einem nächsten Zeitpunkt des Schaltens der dritten Schalter (174H, 174L) einwirkt.

2. Vorrichtung nach Anspruch 1, aufweisend:
- einen Spannungssensor (182), der einen Wert der Gleichspannung liefert;
und
- eine Schaltung (180), die konfiguriert zum Einwirken auf die Frequenz und/oder auf die Verzögerung auf der Grundlage des Wertes der Gleichspannung.

3. Vorrichtung nach Anspruch 1, die eine Schaltung (138; 410) aufweist, die konfiguriert ist zum, bei jeder Halbwelle der Wechselspannung, Einschalten eines einzelnen der zweiten Schalter während mindestens einer mittleren Phase (610, 630) der Halbwelle, wobei der einzelne der zweiten Schalter eine Funktion des Vorzeichens der Halbwelle ist.

4. Vorrichtung nach einem der Ansprüche 1 bis 3, die eine Schaltung (310, 320; 410) aufweist, die konfiguriert ist zum Regeln eines beweglichen Mittelwerts eines Stroms, der durch die Eingangsanschlüsse (102, 104) fließt, und zwar gemäß einem Stromsollwert (Iref) regelt, indem sie auf ein Tastverhältnis (α) des Schaltens der ersten Schalter (132H, 132L) einwirkt.

5. Vorrichtung nach Anspruch 4, wobei der Stromsollwert (Iref) einen Wert hat, der für ein Ergebnis der Multiplikation eines Leitwerts (G) mit einem Wert (Vin) der Wechselspannung repräsentativ ist.

6. Vorrichtung nach Anspruch 5, die eine Schaltung (330, 340; 410) aufweist, die konfiguriert ist zum Regeln eines Wertes (VM, V120) der Spannung des ersten kapazitiven Elements (120) indem sie auf den Leitwert (G) einwirkt.

7. Vorrichtung nach Anspruch 6, aufweisend, für mindestens einen der Anschlüsse (122L) des ersten kapazitiven Elements (122), ein zusätzliches kapazitives Element (420), das den Anschluss des ersten kapazitiven Elements (120) mit den einen der Eingangsanschlüsse (104) koppelt.

8. Vorrichtung nach einem der Ansprüche 3 bis 7, aufweisend eine Schaltung (410), die konfiguriert ist zum Blockieren der zweiten Schalter (130H, 130L) während einer Übergangsphase (620, 640) zwischen den zentralen Phasen (610, 630).

9. Vorrichtung nach Anspruch 8, aufweisend eine Schaltung, die konfiguriert ist zum, in jeder Übergangsphase (620, 640), progressiven Variieren eines Tastverhältnisses (α) des Schaltens der ersten Schalter (132H, 132L), um einen vordefinierten Spannungswert über dem der zweiten Schalter (130H, 130L) zu erhalten, der während der auf die Übergangsphase folgenden zentralen Phase (610, 630) eingeschaltet wird.

10. Vorrichtung nach Anspruch 9, wobei die zentrale Phase (610, 630) nach jeder Übergangsphase (620, 640) zu dem Zeitpunkt beginnt, zu dem die Wechselspannung den vordefinierten Spannungswert hat.

11. Vorrichtung nach Anspruch 9 oder 10, wobei die auf jede zentrale Phase folgende Übergangsphase (620, 640) zu dem Zeitpunkt beginnt, zu dem die Wechselspannung den vordefinierten Wert (610, 630) hat.

12. Vorrichtung nach einem der Ansprüche 1 bis 11, aufweisend eine Schaltung, die konfiguriert ist zum Erhalten eine Nullspannung zwischen den Anschlüssen jedes der ersten Schalter (132H, 132L) während der Zeitpunkte des Schaltens.

13. Vorrichtung nach einem der Ansprüche 1 bis 12, wobei der Transformator (160) einen Kopplungskoeffizienten kleiner als 1 aufweist.

14. Vorrichtung nach einem der Ansprüche 1 bis 13, wobei die ersten Schalter (132H, 132L) Transistoren vom HEMT-Typ sind.

15. Vorrichtung zur Stromversorgung über einen USB-C-Stecker, aufweisend eine Vorrichtung nach einem der Ansprüche 1 bis 14.

## Claims

1. Device for delivering a DC voltage between two output terminals (104, 106) from an AC voltage applied to input terminals (102, 104), comprising:
- a first capacitive element (120);
- two first switches (132H, 132L) in a half-bridge between terminals of the first capacitive element (120);
- two second switches (130H, 130L) electrically in series between the terminals (132H, 132L) of the first capacitive element (120);
- a transformer (160), comprising a first winding (162) placed between a junction node (136) between the first switches (132H, 132L) and one of the input terminals (104), the other one of the input terminals (102) being coupled to a junction node (134) between the second switches;
- a fullwave rectifying circuit (170) delivering the DC voltage, comprising:
o two second capacitive elements (172H, 172L) electrically in series between the output terminals; and
o two third switches (174H, 174L), each placed between one of the output terminals and a second winding (164) of the transformer;
- a circuit (140, 138; 410) configured to switch the first switches (132H, 132L) at a frequency (f) and to control the second switches;
- a circuit (176; 410) configured to control the voltage delivered by the device, acting on said frequency (f) and/or on a delay between a time when an AC current flowing through the second winding (164) changes direction and a next time of switching of the third switches (174H, 174L).

2. Device according to claim 1, comprising:
- a voltage sensor (182) delivering a value of the DC voltage;
and
- a circuit (180) configured to act on said frequency and/or on said delay based on the value of the DC voltage.

3. Device according to claim 1, comprising a circuit (138; 410) configured to, at each halfwave of the AC voltage, turn on a single one of the second switches during at least a central phase (610, 630) of the halfwave, said single one of the second switches being a function of the sign of the halfwave.

4. Device according to any of claims 1 to 3, comprising a circuit (310, 320; 410) configured to regulate a mobile average of a current flowing through the input terminals (102, 104), according to a current set point (Iref), by acting on a duty factor (α) of the switching of the first switches (132H, 132L).

5. Device according to claim 4, wherein the current set point (Iref) has a value representative of a result of the multiplication of a conductance value (G) by a value (Vin) of the AC voltage.

6. Device according to claim 5, comprising a circuit (330, 340; 410) configured to regulate a value (VM, V120) of the voltage of the first capacitive element (120) by acting on said conductance value (G).

7. Device according to claim 6, comprising, for at least one of the terminals (122L) of the first capacitive element (122), an additional capacitive element (420) coupling to the terminal of the first capacitive element (120) said one of the input terminals (104).

8. Device according to any of claims 3 to 7, comprising a circuit (410) configured to block the second switches (130H, 130L) during phase of transition (620, 640) between said central phases (610, 630).

9. Device according to claim 8, comprising a circuit configured to, at each transition phase (620, 640), progressively vary a duty factor (α) of the switching of the first switches (132H, 132L), to obtain a predefined voltage value across that of the second switches (130H, 130L) which will be turned on during the central phase (610, 630) following the transition phase.

10. Device according to claim 9, wherein the central phase (610, 630) following each transition phase (620, 640) starts at the time when the AC voltage has said predefined voltage value.

11. Device according to claim 9 or 10, wherein the transition phase (620, 640) following each central phase starts at the time when the AC voltage has said predefined value (610, 630).

12. Device according to any of claims 1 to 11, comprising a circuit configured to obtain a zero voltage between the terminals of each of the first switches (132H, 132L) at the times of the switchings.

13. Device according to any of claims 1 to 12, wherein the transformer (160) has a coupling coefficient smaller than 1.

14. Device according to any of claims 1 to 13, wherein the first switches (132H, 132L) are HEMT-type transistors.

15. Device of power supply by a USB-C connector comprising a device according to any of claims 1 to 14.
